# EUROPÄISCHE PATENTANMELDUNG

(11) **EP 2 026 092 A2**
(43) Veröffentlichungstag der Anmeldung: **18.02.2009**
(21) Anmeldenummer: 08013493.5
(22) Anmeldetag: 26.07.2008
(51) Int. Cl.: G01S 5/14, G01S 1/00

(54) **Positionierungsvorrichtung und Positionierungsverfahren für ein Satellitennavigationssystem**

(30) Priorität: 01.08.2007 DE 102007036497
(71) Anmelder: Astrium GmbH, 81663 München (DE)
(72) Erfinder: Krüger, Jan M.W., Dr., 80807 München (DE); Trautenberg, Hans L., Dr.,, 85521 Ottobrunn (DE)

(57) **Zusammenfassung**

Die Erfindung betrifft eine Positionierungsvorrichtung (100) für ein Satellitennavigationssystem mit einem Empfänger (112) zum Empfangen atmosphärischer Korrekturdaten und einer Auswerteeinrichtung (114), die ausgebildet ist, um aus einer Mehrzahl von Positionierungssignalen unter Einbeziehung der atmosphärischen Korrekturdaten eine Positionierung zu bestimmen und deren Qualität abzuschätzen.

## Beschreibung

Die Erfindung betrifft eine Positionierungsvorrichtungen gemäß Anspruch 1 sowie ein entsprechendes Positionierungsverfahren gemäß Anspruch 9, die zum Einsatz bei Satellitennavigationssystemen geeignet sind.

Satellitensysteme zur weltweiten Navigation (GNSS; GNSS = Global Navigation Satellite System) werden zur Positionsbestimmung und Navigation auf der Erde und in der Luft eingesetzt. GNSS Systeme, wie beispielsweise das im Aufbau befindliche europäische Satellitennavigationssystem (im Folgenden als Galileo-System oder kurz als Galileo bezeichnet) weisen ein, eine Mehrzahl von Satelliten umfassendes Satelliten-System, ein mit einer zentralen Berechnungsstation verbundenes erdfestes Empfangseinrichtungs-System sowie Nutzungssysteme auf, welche die von den Satelliten übermittelten Satellitensignale auswerten und nutzen.

Zur Positionierung, also der Positionsbestimmung und/oder Navigation, werden von den Nutzungssystemen Signale von mehreren Satelliten empfangen und ausgewertet. Durch den Einfluss der Atmosphäre können die Signale und insbesondere deren Laufzeiten verändert werden. Dies hat einen störenden Einfluss auf die Positionierungsgenauigkeit.

Eine derzeit schwer zu korrigierende Fehlerkomponente von GNSS Entfernungsmessungen ist die troposphärische Komponente. Diese entsteht insbesondere durch kleinskalige lokale Luftdruck- und Luftfeuchteunterschiede. Der Einfluss der Signallaufzeit ist bei der Troposphäre frequenzunabhängig und kann daher nicht wie bei der Ionosphäre über eine Zweifrequenzmessung erfasst werden. Die Troposphäre kann global modelliert werden. Globale troposphärische Modelle weisen jedoch große Modellierungsfehler auf. Diese sind für moderne GNSS Systeme zur größten Fehlerkomponente geworden. Es ist zweifelhaft, ob globale troposphärische Modelle die für Integritätssysteme notwendige Zuverlässigkeit erreichen können. Diese Zuverlässigkeit mag für große Alarmschranken erreichbar sein, stellt jedoch für Systeme mit Alarmschranken in der Größenordnung von 20 m bereits ein ungelöstes Problem dar.

Aufgabe der vorliegenden Erfindung ist es nun, eine Positionierungsvorrichtung und ein Positionierungsverfahren für ein Satellitennavigationssystem vorzuschlagen, mittels denen eine genauere Positionierung möglich ist.

Diese Aufgabe wird durch eine Positionierungsvorrichtung für ein Satellitennavigationssystem gemäß Anspruch 1 sowie ein entsprechendes Positionierungsverfahren gemäß Anspruch 9 gelöst. Bevorzugte Ausgestaltungen der Erfindung ergeben sich aus den abhängigen Ansprüchen.

Ein wesentlicher Gedanke der Erfindung besteht nun darin, atmosphärische Korrekturen in nahezu Echtzeit an eine Positionierungsvorrichtung für ein Satellitennavigationssystem zu übermitteln um eine genauere Positionierung zu ermöglichen. Dieser Ansatz ermöglicht es, abseits lokaler Augmentationssysteme, beispielsweise die troposphärische Fehlerkomponente, die in derzeitigen zwei-Frequenz-GNSS-Systemen den größten Fehleranteil stellt, um Größenordnungen zu reduzieren. Der Fehler, hervorgerufen durch die Troposphäre soll vor allem dann besonders stark reduziert werden, wenn große Abweichungen von den Standardbedingungen herrschen. Dabei wird mit sehr hoher Wahrscheinlichkeit natürlich auch immer der mittlere Fehler reduziert werden. Durch die Reduktion der großen troposphärischen Abweichungen werden kann das troposphärische Fehlerbudget für sicherheitskritische Anwendungen deutlich reduziert werden. Dadurch lassen sich bestehende oder zukünftige Kommunikationsbandbreiten effizient für eine Serviceverbesserung nutzen. Dies ist für die GNSS Nutzer von großem Vorteil und eröffnet den Betreibern große Vorteile und Geschäftsmöglichkeiten.

Die vorliegende Erfindung betrifft nun gemäß einer Ausführungsform eine Positionierungsvorrichtung für ein Satellitennavigationssystem mit
- einem Empfänger zum Empfangen atmosphärischer Korrekturdaten und
- einer Auswerteeinrichtung, die ausgebildet ist, um aus einer Mehrzahl von Positionierungssignalen unter Einbeziehung der atmosphärischen Korrekturdaten eine Positionierung zu bestimmen und deren Qualität abzuschätzen.
   Die Auswerteeinrichtung kann ausgebildet sein, um durch atmosphärische Einflüsse hervorgerufene Fehlerkomponenten der Positionierungssignale mittels der atmosphärischen Korrekturdaten zu kompensieren. Dadurch kann eine erheblich exaktere Positionierung durchgeführt werden und die Abschätzung der Wahrscheinlichkeit für Positionslösungen mit Fehlern oberhalb einer gegeben Schranke führt zu deutlich geringeren Wahrscheinlichkeiten.
   Die atmosphärischen Korrekturdaten können aktuelle Luftdruck- und/oder Luftfeuchtedaten der Troposphäre aufweisen. Dadurch lassen sich auf dem Luftdruck oder der Luftfeuchte basierende Störungen der Positionierungssignale korrigieren. Die Daten können nicht nur lokale Messwerte sein, sondern auch Modelle wie sich die Luftdruck und/oder die Luftfeuchte und/oder die Temperatur räumlich und zeitlich verhalten.
   Der Empfänger kann ausgebildet sein, um die atmosphärischen Korrekturdaten über einen Übertragungskanal zu empfangen, der zur Übertragung mindestens eines der Mehrzahl von Positionierungssignalen geeignet ist. Es ist somit kein zusätzlicher Übertragungskanal für die atmosphärischen Korrekturdaten erforderlich.
   Über die Mehrzahl von Positionierungssignalen können Nutzdaten übertragbar sein und die atmosphärischen Korrekturdaten können über mindestens eines der Mehrzahl von Positionierungssignalen übertragbar sein. Dies ermöglicht eine platzsparende Einbettung der atmosphärischen Korrekturendaten in die Positionierungssignale.
   Die Positionierungsvorrichtung kann einen Speicher zum Speichern eines Modells der Atmosphäre sowie eine Anpasseinrichtung zum Anpassen des Modells der Atmosphäre basierend auf den atmosphärischen Korrekturdaten und zum Bereitstellen eines angepassten Modells der Atmosphäre an die Auswerteeinrichtung aufweisen, wobei die Auswerteeinrichtung ausgebildet sein kann, um die Positionierung unter Einbeziehung des angepasste Modells der Atmosphäre zu bestimmen. Die Speicherung des Modells der Atmosphäre ermöglicht eine Reduzierung der zu übertragenden atmosphärischen Korrekturdaten auf die wesentlichen Daten die zur Anpassung des gespeicherten Modells erforderlich sind.
   Die Positionierungsvorrichtung kann ferner einen Luftdrucksensor zum Erfassen lokaler Luftdruck- und/oder Luftfeuchtedaten aufweisen, wobei die Auswerteeinrichtung ausgebildet sein kann, um die Positionierung unter Einbeziehung der lokalen Luftdruck- und/oder Luftfeuchtedaten zu bestimmen. Durch den Luftdrucksensor können die atmosphärischen Korrekturdaten weiter ergänzt werden. Zudem ermöglicht der Luftdrucksensor eine genauere Positionierung auch dann, wenn keine atmosphärischen Korrekturdaten zur Verfügung stehen.
   Die vorliegende Erfindung betrifft gemäß einer weiteren Ausführungsform ein System zur Navigation oder Positionsbestimmung mit
- einer Mehrzahl von Sendern, die ausgebildet sind, um Positionierungssignale auszusenden; und
- mindestens einer Positionierungsvorrichtung gemäß einer Ausführungsform der vorliegenden Erfindung.

Die vorliegende Erfindung betrifft gemäß einer weiteren Ausführungsform ein Positionierungsverfahren für ein Satellitennavigationssystem, das folgende Schritte umfasst:
- Empfangen atmosphärischer Korrekturdaten; und
- Bestimmen einer Positionierung aus einer Mehrzahl von Positionierungssignalen unter Einbeziehung der atmosphärischen Korrekturdaten.

Die vorliegende Erfindung betrifft gemäß einer weiteren Ausführungsform ein Computer-Programm zur Durchführung eines Positionierungsverfahrens gemäß einer Ausführungsform der vorliegenden Erfindung und ein Computer-Programm-Produkt beinhaltend einen maschinenlesbaren Programmträger, auf dem ein Computer-Programm gemäß einer Ausführungsform der vorliegenden Erfindung in der Form von elektronisch und/oder optischen lesbaren Steuersignalen gespeichert ist.

Weitere Vorteile und Anwendungsmöglichkeiten der vorliegenden Erfindung ergeben sich aus der nachfolgenden Beschreibung in Verbindung mit dem in der einzigen Zeichnung dargestellten Ausführungsbeispiel. Die einzige Zeichnung zeigt in der Fig. eine Positioniervorrichtung gemäß einem Ausführungsbeispiel der vorliegenden Erfindung.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

Die Fig. zeigt ein System zur Positionsbestimmung oder Navigation mit einer Positionierungsvorrichtung 100 und Sendern 102, 104, 106, gemäß einem Ausführungsbeispiel der vorliegenden Erfindung. Bei dem System kann es sich um ein GNSS System, wie beispielsweise das Galileo System handeln. In diesem Fall kann es sich bei den Sendern 102, 104, 106 um Satelliten und bei der Positionierungsvorrichtung 100 um ein Nutzungssystem oder Endgerät handeln, dass eine Positionierung auf der Erde oder in der Luft ermöglicht. Dazu können die Sender 102, 104, 106 ausgebildet sein, um Positionierungssignale auszusenden. Die Positionierungssignale können von der Positionierungsvorrichtung 100 empfangen und verwendet werden, um eine Positionierung der Positionierungsvorrichtung 100 zu bestimmen und bereitzustellen. Ferner ist mindestens einer der Sender 102, 104, 106 ausgebildet um atmosphärische Korrekturdaten auszusenden. Alternativ können die atmosphärischen Korrekturdaten von einem zusätzlichen Sender übertragen werden, der kein Positionierungssignal überträgt.

Die Anzahl der Sender 102, 104, 106 ist hier nur beispielhaft dargestellt. Beispielsweise kann es erforderlich sein, dass die Positionierungsvorrichtung 100 zum Zeitpunkt der Positionierung Positionierungssignale von mehr als den drei gezeigten unterschiedlichen Sendern 102, 104, 106 benötigt, um die Positionierung durchführen zu können.

Die Positionierungsvorrichtung 100 weist einen Empfänger 112 und eine Auswerteeinrichtung 114 auf. Der Empfänger 112 ist ausgebildet, um die atmosphärischen Korrekturdaten zu empfangen. Der Empfänger kann ferner ausgebildet sein, um die Positionierungssignale von den Sendern 102, 104, 106 zu empfangen. Die Auswerteeinrichtung 114 ist ausgebildet, um aus den Positionierungssignalen und unter Einbeziehung der atmosphärischen Korrekturdaten eine Positionierung der Positionierungsvorrichtung 100 zu bestimmen und bereitzustellen.

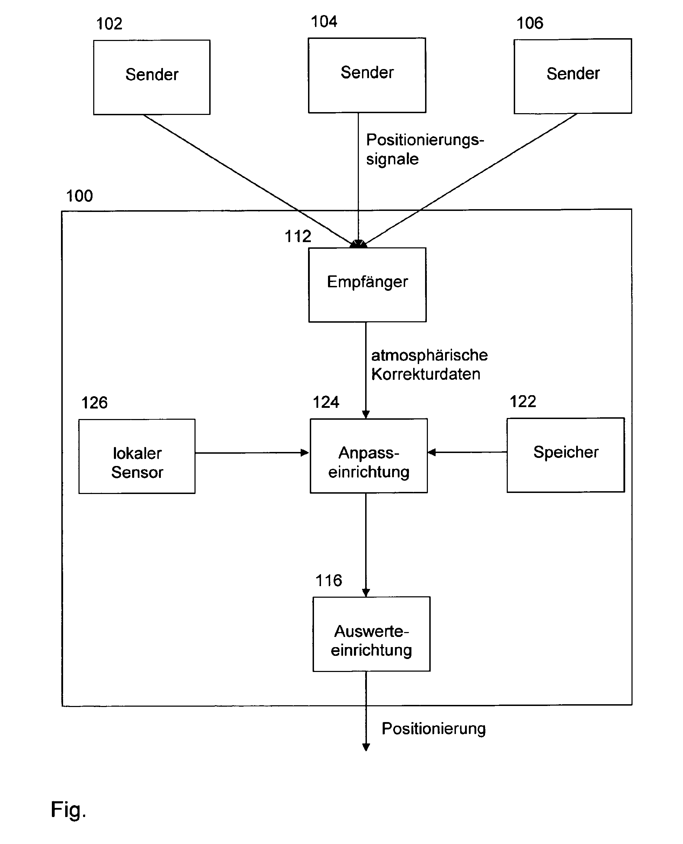

Der Empfänger 112 kann ausgebildet sein, um die atmosphärischen Korrekturdaten über einen zur Übertragung mindestens eines der Mehrzahl von Positionierungssignalen geeigneten Übertragungskanal zu empfangen. Beispielsweise können die atmosphärischen Korrekturdaten über mindestens eines der Mehrzahl von Positionierungssignalen übertragbar sein, wobei der Empfänger 112 ausgebildet ist, um das mindestens eine Positionierungssignal zu empfangen, mit dem die atmosphärischen Korrekturdaten übertragen werden. Hierbei können die atmosphärischen Korrekturdaten in das mindestens eine Positionierungssignal eingebettet sein. Alternativ können die atmosphärischen Korrekturdaten getrennt von den Positionierungssignalen übertragen und von dem Empfänger 112 empfangen werden. Der Empfänger 112 ist ausgebildet, um die atmosphärischen Korrekturdaten und die Positionierungssignale, sofern sie von dem Empfänger 112 empfangen werden, an die Auswerteeinrichtung 114 bereitzustellen. Werden die Positionierungssignale nicht von dem Empfänger 112 empfangen, so kann die Positionierungsvorrichtung einen weiteren Empfänger (nicht gezeigt in Fig. 1) zum Empfangen der Positionierungssignale aufweisen.

Die Auswerteeinrichtung 114 ist ausgebildet, um aus den bereitgestellten Positionierungssignalen die Positionierung der Positionierungsvorrichtung 100 zu bestimmen. Dabei ist die Auswerteeinrichtung 114 ausgebildet, um die Positionierung unter Berücksichtigung der empfangenen atmosphärischen Korrekturdaten zu bestimmen. Die Auswerteeinrichtung 114 kann ausgebildet sein, um einen vorbestimmter Algorithmus auszuführen, mit dem sich die Positionierung aus den Positionierungssignalen und den atmosphärischen Korrekturdaten bestimmen lässt.

Gemäß einem Ausführungsbeispiel weist die Positionierungsvorrichtung 100 einen Speicher 122 auf, in dem ein Modell der Atmosphäre speicherbar ist. Das Modell der Atmosphäre kann von der Auswerteeinrichtung 114 verwendet werden, um eine genauere Positionierung zu erzielen. Eine noch genauere Positionierung lässt sich erzielen, wenn das Modell der Atmosphäre mit Hilfe der atmosphärischen Korrekturdaten angepasste bzw. korrigiert wird. Dazu kann die Positionierungsvorrichtung 100 eine Anpasseinrichtung 124 aufweisen, die ausgebildet ist, um das gespeicherte Modell der Atmosphäre basierend auf den atmosphärischen Korrekturdaten anzupassen bzw. zu korrigieren und als angepasstes Modell der Atmosphäre an die Auswerteeinrichtung 114 bereitzustellen. Die Auswerteeinrichtung 114 kann nun ausgebildet sein, um die Positionierung unter Berücksichtigung des angepassten Modells der Atmosphäre zu bestimmen.

Dies ermöglicht es der Auswerteeinrichtung 114, Fehlerkomponenten der Positionierungssignale, die auf atmosphärischen Einflüssen basieren, mit Hilfe des angepassten Modells der Atmosphäre zu kompensieren. Gemäß einem Ausführungsbeispiel weisen die atmosphärischen Korrekturdaten dazu aktuelle Luftdruck- und/oder Luftfeuchtedaten und/oder Temperaturdaten der Troposphäre auf.

Gemäß einem weiteren Ausführungsbeispiel weist die Positionierungsvorrichtung 100 einen lokalen Sensor 126 auf. Der lokale Sensor 126 kann ausgebildet sein, um einen bezüglich der Positionierungsvorrichtung lokalen Luftdruck und/oder eine lokale Luftfeuchtigkeit und/oder Temperatur zu messen. Der lokale Sensor 126 kann ausgebildet sein, um die erfassten Messdaten an die Anpasseinrichtung 124 bereitzustellen. Die Anpasseinrichtung 124 kann ausgebildet sein, um das gespeicherte Modell der Atmosphäre mit Hilfe der von dem lokalen Sensor 126 bereitgestellten Messdaten anzupassen bzw. zu korrigieren. Alternativ kann der lokalen Sensor 126 ausgebildet sein, um die erfassten Messdaten an die Auswerteeinrichtung 114 bereitzustellen. Die Auswerteeinrichtung 114 kann ausgebildet sein, um die Positionierung unter Einbeziehung der von dem lokalen Sensor 126 bereitgestellten Messdaten zu bestimmen.

Die von dem lokalen Sensor 126 bereitgestellten Messdaten können zusätzlich oder alternativ zu den vom Empfänger 112 empfangenen atmosphärischen Korrekturdaten verwendet werden, um eine genauere Positionierung zu erreichen.

Alternativ kann der lokale Sensor auch außerhalb der Positionierungsvorrichtung angeordnet sein und die erfassten Messdaten über eine Kommunikationsschnittstelle an die Positionierungsvorrichtung übertragen.

Mit anderen Worten ausgedrückt wird in Form der atmosphärischen Korrekturdaten ein auf Messungen basiertes globales Luftdruck- und/oder Luftfeuchtemodell und/oder Temperaturmodell über Navigationsdatenkanäle verbreitet, dass den Empfängern eine Anpassung bzw. Korrektur eines eingebauten groben Modells ermöglicht. Ein lokaler Luftdrucksensor und/oder Luftfeuchtesensor und/oder Temperatursensor kann zum Feintuning herangezogen werden.

Somit können beispielsweise troposphärische Korrekturen in nahezu Echtzeit direkt über GNSS Datenkanälen verbreitet werden. Dazu kann ein Korrekturgrid, das in nahezu Realzeit, beispielsweise in der Größenordnung von Stunden, angepasst wird, platzsparend in einen Navigationsdatenstrom eingebettet werden oder über einen, unter Umständen kostenpflichtigen Zusatzdienst, angeboten werden. Es können alternativ auch die Orte, Ausdehnungen und Werte der Luftdruck- und/oder Temperatur- und/oder Luftfeuchteabweichungen vom groben Standardmodel angeboten werden.

In den beschriebenen Positionierungsvorrichtungen ausgeführte Positionierungsverfahren können in Form eines Computerprogramms an die Positionierungsvorrichtungen bereitgestellt werden und von diesen ausgeführt werden.

Die einzelnen Ausführungsbeispiele sind beispielhaft beschrieben und können abhängig von möglichen Einsatzumgebungen angepasst und sofern zweckmäßig auch miteinander kombiniert werden. Insbesondere können die eingesetzten Sender und die Anzahl und Ausgestaltung der verwendeten Positionierungssignale an das jeweilige GNSS System angepasst werden, in dem die erfindungsgemäße Positionierungsvorrichtung oder das erfindungsgemäße Positionierungsverfahren Verwendung finden. So ist es beispielsweise möglich, dass nicht alle empfangenen Positionierungssignale auch zur Bestimmung der Positionierung verwendet werden.

## Patentansprüche

1. Positionierungsvorrichtung (100) für ein Satellitennavigationssystem mit
- einem Empfänger (112) zum Empfangen atmosphärischer Korrekturdaten; und
- einer Auswerteeinrichtung (114), die ausgebildet ist, um aus einer Mehrzahl von Positionierungssignalen unter Einbeziehung der atmosphärischen Korrekturdaten eine Positionierung zu bestimmen.

2. Positionierungsvorrichtung gemäß Anspruch 1, wobei die Auswerteeinrichtung (114) ausgebildet ist, um durch atmosphärische Einflüsse hervorgerufene Fehlerkomponenten der Positionierungssignale mittels der atmosphärischen Korrekturdaten zu kompensieren.

3. Positionierungsvorrichtung gemäß Anspruch 1 oder 2, wobei die atmosphärischen Korrekturdaten aktuelle Luftdruck- und/oder Luftfeuchte und/oder Lufttemperaturdaten der Troposphäre aufweisen.

4. Positionierungsvorrichtung gemäß einem der Ansprüche 1 bis 3, wobei der Empfänger (112) ausgebildet ist, um die atmosphärischen Korrekturdaten über einen Übertragungskanal zu empfangen, der zur Übertragung mindestens eines der Mehrzahl von Positionierungssignalen geeignet ist.

5. Positionierungsvorrichtung gemäß einem der Ansprüche 1 bis 4, wobei über die Mehrzahl von Positionierungssignalen Nutzdaten übertragbar sind und wobei die atmosphärischen Korrekturdaten über mindestens eines der Mehrzahl von Positionierungssignalen übertragbar sind.

6. Positionierungsvorrichtung gemäß einem der Ansprüche 1 bis 5, ferner umfassend einen Speicher (122) zum Speichern eines Modells der Atmosphäre sowie eine Anpasseinrichtung (124) zum Anpassen des Modells der Atmosphäre basierend auf den atmosphärischen Korrekturdaten und zum Bereitstellen eines angepassten Modells der Atmosphäre an die Auswerteeinrichtung (114), wobei die Auswerteeinrichtung ausgebildet ist, um die Positionierung unter Einbeziehung des angepasste Modells der Atmosphäre zu bestimmen.

7. Positionierungsvorrichtung gemäß einem der Ansprüche 1 bis 6, ferner umfassend einen Luftdrucksensor (126) zum Erfassen lokaler Luftdruck- und/oder Luftfeuchtedaten, wobei die Auswerteeinrichtung (124) ausgebildet ist, um die Positionierung unter Einbeziehung der lokalen Luftdruck- und/oder Luftfeuchtedaten zu bestimmen.

8. System zur Navigation oder Positionsbestimmung mit
- einer Mehrzahl von Sendern (102, 104, 106) die ausgebildet sind, um Positionierungssignale auszusenden; und
- mindestens einer Positionierungsvorrichtung (100) gemäß einem der vorangegangenen Ansprüche.

9. Positionierungsverfahren für ein Satellitennavigationssystem, das folgende Schritte umfasst:
- Empfangen atmosphärischer Korrekturdaten; und
- Bestimmen einer Positionierung aus einer Mehrzahl von Positionierungssignalen unter Einbeziehung der atmosphärischen Korrekturdaten.

10. Positionierungsverfahren gemäß Anspruch 9, ferner umfassend die Schritte:
- Abschätzungen der Wahrscheinlichkeit mit der ein Positionierungsfehler größer der Alarmschranken vorliegt, und /oder
- Abschätzung der Kontinuität der Positionslösung, und/oder Abschätzung der Kontinuität der Existenz einer Positionslösung für die die Wahrscheinlichkeit einen Positionierungsfehler größer der Alarmschranken vorliegen zu haben, kleiner als ein vorgegebenes Risiko ist.

11. Computer-Programm zur Durchführung des Verfahrens gemäß Anspruch 9 oder Anspruch 10.

12. Computer-Programm-Produkt beinhaltend einen maschinenlesbaren Programmträger, auf dem ein Computer-Programm gemäß Anspruch 11 in der Form von elektronisch und/oder optischen lesbaren Steuersignalen gespeichert ist.
